# EUROPEAN PATENT APPLICATION

(11) **EP 4 749 749 A1**
(43) Date of publication of application: **27.05.2026**
(21) Application number: 24878402.7
(22) Date of filing: 23.04.2024
(51) Int. Cl.: H01M 10/0583, H01M 10/0585

(54) **BATTERY CELL, BATTERY, AND ELECTRIC DEVICE**

(30) Priority: 18.10.2023 CN 202311352181
(71) Applicant: Contemporary Amperex Technology Co., Limited, Ningde, Fujian 352100 (CN)
(72) Inventor: WU, Kai, Ningde, Fujian 352100 (CN); LIN, Jiang, Ningde, Fujian 352100 (CN); OU, Fuming, Ningde, Fujian 352100 (CN); WU, Bingzhao, Ningde, Fujian 352100 (CN); LIU, Dandan, Ningde, Fujian 352100 (CN); HUANG, Gongxun, Ningde, Fujian 352100 (CN); GONG, Youlai, Ningde, Fujian 352100 (CN)
(74) Representative: Ziebig Hengelhaupt Intellectual Property Attorneys Patentanwaltskanzlei PartGmbB
(86) International application number: PCT/CN2024/089327
(87) International publication number: WO 2025/081749

(57) **Abstract**

The present application provides a battery cell (20), a battery (100), and a power consuming apparatus, belonging to the field of battery technologies. The battery cell (20) includes a first electrode sheet (231), separators (233), and a plurality of second electrode sheets (232). The first electrode sheet (231) is provided with a plurality of structurally weakened areas (234) extending in a width direction of the first electrode sheet (231). The separators (233) cover surfaces on two opposite sides of the first electrode sheet (231). The plurality of second electrode sheets (232) are alternately arranged on the separators (233) on the two opposite sides of the first electrode sheet (231). Every two adjacent second electrode sheets (232) are located on different sides of the first electrode sheet (231) in a length direction of the first electrode sheet (231), and one corresponding structurally weakened area (234) is present between every two adjacent second electrode sheets (232). The first electrode sheet (231) is folded at the plurality of structurally weakened areas (234), so that the first electrode sheet (231) and the plurality of second electrode sheets (232) are alternately stacked with each other.

## Description

### CROSS-REFERENCE TO RELATED APPLICATIONS

The present application claims priority to Chinese Patent Application No. 202311352181.X, filed on October 18, 2023 and entitled "BATTERY CELL, BATTERY, AND POWER CONSUMING APPARATUS", which is incorporated herein by reference in its entirety.

### TECHNICAL FIELD

Embodiments of the present application relate to the field of battery technologies, and in particular, to a battery cell, a battery, and a power consuming apparatus.

### BACKGROUND

Energy conservation and emission reduction are the key to the sustainable development of automobile industry, and electric vehicles have become an important part of the sustainable development of automobile industry due to their advantage of energy conservation and environment protection. For the electric vehicles, battery technology is also an important factor that relates to the development of the electric vehicles.

However, it is still difficult to achieve better performance of a battery cell. Therefore, how to improve the performance of a battery cell is a problem to be resolved urgently in battery technologies.

### SUMMARY

The present application aims to resolve at least one of technical problems existing in the related art. Therefore, an objective of the present application is to provide a battery cell, a battery, and a power consuming apparatus, so as to improve the performance of the battery cell.

An embodiment of a first aspect of the present application provides a battery cell, including a first electrode sheet, separators, and a plurality of second electrode sheets. The first electrode sheet is provided with a plurality of structurally weakened areas extending in a width direction of the first electrode sheet. The separators cover surfaces on two opposite sides of the first electrode sheet. The plurality of second electrode sheets are alternately arranged on the separators on the two opposite sides of the first electrode sheet. Every two adjacent second electrode sheets are located on different sides of the first electrode sheet in a length direction of the first electrode sheet, and one corresponding structurally weakened area is present between every two adjacent second electrode sheets. The first electrode sheet is folded at the plurality of structurally weakened areas, so that the first electrode sheet and the plurality of second electrode sheets are alternately stacked with each other.

In the technical solution of the embodiments of the present application, the first electrode sheet is provided with the plurality of structurally weakened areas extending in the width direction of the first electrode sheet. Because the mechanical strength of the plurality of structurally weakened areas is less than the mechanical strength of the remaining areas of the first electrode sheet, by providing the plurality of structurally weakened areas extending in the width direction of the first electrode sheet on the first electrode sheet, the first electrode sheet can be bent more easily and can be accurately folded at predetermined positions, thereby reducing the misalignment between the first electrode sheet and the second electrode sheets and improving the flatness of the first electrode sheet after folding. In addition, when a plurality of segments of the first electrode sheet and the plurality of second electrode sheets are alternately stacked with each other, every two adjacent segments of the first electrode sheet are connected through the structurally weakened area, every two adjacent second electrode sheets are located on different sides of the first electrode sheet, and one corresponding structurally weakened area is present between every two adjacent second electrode sheets, which reduces a gap between the first electrode sheet and the second electrode sheets and alleviates the problem of lithium plating of the battery cell, thereby improving the performance of the battery cell.

In some embodiments, the structurally weakened area includes grooves extending in the width direction of the first electrode sheet. The structurally weakened area includes the grooves extending in the width direction of the first electrode sheet, which has a good effect of guiding bending of the first electrode sheet. In addition, the grooves can improve the precision of folded positions and reduce the misalignment after two adjacent layers of the electrode sheet in the battery cell are stacked, so that the battery cell has good performance.

In some embodiments, the structurally weakened area includes two grooves extending in the width direction of the first electrode sheet, and the two grooves are spaced apart from each other in the length direction of the first electrode sheet. The structurally weakened area includes the two grooves extending in the width direction of the first electrode sheet, and the two grooves are spaced apart from each other in the length direction of the first electrode sheet, so that the first electrode sheet can be folded along the two grooves, which makes the first electrode sheet folded more easily and improves the precision of the folded positions. In addition, the segments of the first electrode sheet can be aligned with each other, which reduces the misalignment between the first electrode sheet and the second electrode sheets, thereby further improving the performance of the battery cell.

In some embodiments, a spacing between the two grooves is greater than or equal to a thickness of a corresponding second electrode sheet. The first electrode sheet is folded at the plurality of structurally weakened areas, and the spacing between formed bends is greater than or equal to the thickness of the second electrode sheet, so that when a plurality of segments of the first electrode sheet and a plurality of second electrode sheets are alternately stacked with each other, the second electrode sheets are not squeezed by the first electrode sheet. In addition, the gap between the first electrode sheet and the second electrode sheets at the bends can be reduced, which alleviates the problem of lithium plating of the battery cell, thereby improving the performance of the battery cell.

In some embodiments, a length of each of the grooves is less than or equal to a width of the first electrode sheet. The length of each of the grooves is less than or equal to the width of the first electrode sheet, thereby defining the maximum length of the groove. Because the length of the groove does not exceed the width of the first electrode sheet, the mechanical strength of the structurally weakened area can be maintained at a particular level, thereby reducing the probability of breaking of the first electrode sheet during folding and improving the production yield of the battery cell.

In some embodiments, the structurally weakened area further includes through holes running through a thickness of the first electrode sheet. Because the first electrode sheet has a small thickness, the through holes does not need precise depth control, which can lower the requirement for machining precision. In addition, the through holes can reduce the strength of the first electrode sheet to a large extent, which makes the first electrode sheet folded easily.

In some embodiments, a number N of the through holes satisfies: N≥2. By providing the plurality of through holes, the mechanical strength of the first electrode sheet can be reduced, and the structurally weakened areas of the first electrode sheet can maintain a particular mechanical strength, so as to reduce the possibility of breaking of the first electrode sheet during folding.

In some embodiments, the plurality of structurally weakened areas are equidistantly spaced apart from each other in the length direction of the first electrode sheet. The plurality of structurally weakened areas are equidistantly spaced apart from each other in the length direction of the first electrode sheet. By setting a suitable spacing distance, the structurally weakened areas can be located at the bends, so that the strength of the bends can be reduced. Thus, the first electrode sheet can be bent more easily and can be accurately folded at the predetermined positions, which reduces the misalignment of the plurality of layers of the electrode sheet and improves the flatness of the first electrode sheet after folding, thereby improving the performance of the battery cell.

In some embodiments, the first electrode sheet is an anode sheet, and the second electrode sheets are cathode sheets. The outermost layer of the battery cell is the anode sheet, so that the number of layers of the negative electrode sheets after folding can be reduced, and the cathode active material of the cathode sheets can be fully used.

An embodiment of a second aspect of the present application provide a method for producing a battery cell, including: forming a plurality of structurally weakened areas on a first electrode sheet, the plurality of structurally weakened areas extending in a width direction of the first electrode sheet; covering surfaces of two opposite sides of the first electrode sheet with separators; alternately arranging a plurality of second electrode sheets on the separators on the two opposite sides of the first electrode sheet, where every two adjacent second electrode sheets are located on different sides of the first electrode sheet in a length direction of the first electrode sheet, and one corresponding structurally weakened area is present between every two adjacent second electrode sheets; and folding the first electrode sheet at the plurality of structurally weakened areas, so that the first electrode sheet and the plurality of second electrode sheets are alternately stacked with each other.

In the technical solution of the embodiment of the present application, the plurality of structurally weakened areas extending in the width direction of the first electrode sheet are formed on the first electrode sheet, so that the first electrode sheet can be bent more easily and can be accurately folded at the predetermined positions, thereby reducing the misalignment between the first electrode sheet and the second electrode sheets and improving the flatness of the first electrode sheet after folding. In addition, when a plurality of segments of the first electrode sheet and the plurality of second electrode sheets are alternately stacked with each other, every two adjacent segments of the first electrode sheet are connected through the structurally weakened area, every two adjacent second electrode sheets are located on different sides of the first electrode sheet, and one corresponding structurally weakened area is present between every two adjacent second electrode sheets, which reduces the gap between the first electrode sheet and the second electrode sheets and alleviates the problem of lithium plating, thereby improving the performance of the battery cell.

An embodiment of a third aspect of the present application provides a battery, including the battery cell in the foregoing embodiment.

An embodiment of a third aspect of the present application provides a power consuming apparatus, including the battery in the foregoing embodiment. The battery is configured to supply electric energy.

The above description only refers to an overview of the technical solutions of the present application. In order to understand the technical means of the present application more clearly such that it can be implemented according to the content of the specification, and to make the above-mentioned and other purposes, features, and advantages of the present application more apparent, specific embodiments of the present application are listed below.

### BRIEF DESCRIPTION OF THE DRAWINGS

In the accompanying drawings, unless otherwise specified, the same reference signs throughout multiple drawings represent the same or similar components or elements. These drawings may not necessarily be drawn to scale. It should be understood that these drawings only depict some implementations disclosed in the present application and should not be construed as limiting the scope of the present application. In order to provide a clearer explanation of the technical solutions of the embodiments of the present application, a brief introduction will be given to the accompanying drawings required in the embodiments of the present application. It is apparent that the accompanying drawings described below show only some embodiments of the present application. For those of ordinary skill in the art, other accompanying drawings can be obtained based on these drawings without any creative effort.
FIG. 1 is a schematic structural diagram of a vehicle according to some embodiments of the present application;
FIG. 2 is a schematic diagram of an exploded structure of a battery according to some embodiments of the present application;
FIG. 3 is a schematic diagram of an exploded structure of a battery cell according to some embodiments of the present application;
FIG. 4 is a schematic structural diagram of a first electrode sheet in an unfolded state according to some embodiments of the present application;
FIG. 5 is a schematic structural diagram of a battery cell formed by folding according to some embodiments of the present application;
FIG. 6 is a sectional view taken along line A-A in FIG. 4;
FIG. 7 is a flowchart of a method for producing a battery cell according to some embodiments of the present application;
FIG. 8 is a composite schematic diagram of a first electrode sheet and separators according to some embodiments of the present application; and
FIG. 9 is a composite schematic diagram of a first electrode sheet, second electrode sheets, and separators according to some embodiments of the present application.

Description of reference numerals:
1000, vehicle;
100, battery; 200, controller; 300, motor;
10, box; 11, first part; 12, second part;
20, battery cell; 21, end cover; 21a, electrode terminal; 22, case; 23, cell assembly; 23a, tab;
231, first electrode sheet; 232, second electrode sheet; 233, separator; 234, structurally weakened area; 235, groove; 236, through hole; and 237, roller.

### DETAILED DESCRIPTION

The embodiments of the technical solutions of the present application will be described in detail below with reference to the drawings. The following embodiments are only used to describe the technical solutions of the present application more explicitly, and are thus only interpreted as embodiments, rather than used to limit the protection scope of the present application.

Unless otherwise defined, meanings of all technical and scientific terms used in this specification are the same as those usually understood by a person skilled in the art to which the present application belongs. The terms used in the specification are merely intended to describe objectives of specific embodiments, but are not intended to limit the present application. The terms "including" and "having" and any variants thereof in the specification and claims of the present application and in the description of the accompanying drawings are intended to cover non-exclusive inclusion.

In the description according to the embodiments of the present application, the technical terms "first", "second", and the like are only used to distinguish different objects, and should not be understood as indicating or implying relative importance or implying the number, a specific order, or a primary and secondary relationship of indicated technical features. In the description according to the embodiments of the present application, "a plurality of" means two or more, unless otherwise expressly and specifically defined.

"Embodiment" mentioned herein means that particular features, structures, or characteristics described with reference to the embodiment may be included in at least one embodiment of the present application. The term appearing at different positions of the specification may not necessarily refer to the same embodiment or an independent or alternative embodiment that is mutually exclusive with another embodiment. A person skilled in the art explicitly and implicitly understands that the embodiments described herein may be combined with other embodiments.

In the descriptions of embodiments of the present application, the term "and/or" in the present application describes only an association relationship for describing associated objects and represents that three relationships may be present. For example, A and/or B may represent the presence of the three cases: A alone, both A and B, and B alone. In addition, the character "/" in this specification generally indicates an "or" relationship between the associated objects.

In the description of the embodiments of the present application, the term "a plurality of" means two or more (including two). Similarly, "a plurality of groups" means two or more groups (including two groups), and "a plurality of pieces" means two or more pieces (including two pieces).

In the description of the embodiments of the present application, orientations or positional relationships indicated by technical terms "center", "longitudinal", "lateral", "length", "width", "thickness", "upper", "lower", "front", "rear", "left", "right", "vertical" "horizontal", "top", "bottom", "inner", "outer", "clockwise", "counterclockwise", "axial", "radial", "circumferential", or the like are based on orientations or positional relationships shown in the drawings, and are only for the convenience of describing the embodiments of the present application and simplifying the description, and do not indicate or imply that a device or element referred to must have a specific orientation, be constructed and operated in a specific orientation, and therefore cannot be understood as limitations to the embodiments of the present application.

In the descriptions of the embodiments of the present application, unless otherwise explicitly provided and limited, the technical terms such as "mount", "connect", "couple", and "fix" should be understood broadly, which, for embodiment, may refer to a fixed connection, a detachable connection, or an integral connection; which may refer to a mechanical connection or an electrical connection; which may refer to a direct connection or an indirect connection via an intermediate medium; which may also refer to a communication between the insides of two elements. For a person of ordinary skill in the art, the specific meanings of the above terms in the embodiments of the present application may be interpreted according to specific situations.

At present, from the perspective of market development, application of power batteries becomes increasingly extensive. Power batteries are not only used in energy storage power systems such as hydro, thermal, wind, and solar power stations, but also widely used in electric means of transport such as electric bicycles, electric motorcycles, and electric vehicles, and used in many other fields such as military equipment and aerospace. With continuously increasing application of the power batteries, the market demand is also constantly expanding.

Structurally, a battery usually includes one or more battery cells, that is, a battery cell is the smallest unit forming a battery. The plurality of battery cells may be connected in series, parallel, or series-parallel. The series-parallel connection means that both series connection and parallel connection exist among the plurality of battery cells.

Further, the battery cell is mainly formed by a cathode sheet and an anode sheet that are wound or stacked, and a separator is usually arranged between the cathode sheet and the anode sheet. Compared with a wound battery cell, a laminated battery cell has the advantages of high rate and high energy density, and the laminated battery cell can further be made into various special shaped batteries according to different requirements. Therefore, the laminated battery cell is generally used in the industry to manufacture a battery.

Currently, in a production process of a laminated battery cell, a continuous electrode sheet may be repeatedly folded to form the laminated battery cell. However, it is difficult for a laminated battery cell to achieve good performance. An important factor is that in the process of folding the continuous electrode sheet, it is difficult to accurately fold the continuous electrode sheet at predetermined positions, causing a large misalignment between layers of the electrode sheet and poor flatness after the electrode sheet is folded.

In view of this, it is conceived that a score may be provided at the folded position, to guide the continuous electrode sheet to be folded at the predetermined position. However, there is usually only one score, and it is still difficult for the continuous electrode sheet to be folded normally. At the corner of the fold of the continuous electrode sheet, there is a nonoverlapping part between the anode sheet and the cathode sheet. In addition, the electrode sheet easily deflects during folding. As a result, some of lithium ions obtained by electrolysis from the cathode sheet cannot completely reach a coating area of an anode sheet active material of the anode sheet that the lithium ions face directly, causing lithium plating and insignificant improvement in the performance of the battery cell.

Based on the foregoing problem, the present application provides a battery cell. The battery cell includes a first electrode sheet and a plurality of second electrode sheets. The first electrode sheet is provided with a plurality of structurally weakened areas extending in a width direction of the first electrode sheet. The plurality of structurally weakened areas are spaced apart from each other in a length direction of the first electrode sheet to divide the first electrode sheet into a plurality of segments. A mechanical strength of the plurality of structurally weakened areas is less than a mechanical strength of the remaining areas of the first electrode sheet. Surfaces on two opposite sides of the first electrode sheet are covered with separators. The plurality of second electrode sheets are alternately arranged on the separators on the two opposite sides of the first electrode sheet. Every two adjacent second electrode sheets are located on different sides of the first electrode sheet in a length direction of the first electrode sheet, and one corresponding structurally weakened area is present between every two adjacent second electrode sheets. The first electrode sheet is folded at the plurality of structurally weakened areas, so that the plurality of segments of the first electrode sheet and the plurality of second electrode sheets are alternately stacked with each other. In this way, the first electrode sheet can be accurately folded at the predetermined positions, which reduces the misalignment between the plurality of layers of the electrode sheet, improves the flatness of the first electrode sheet after folding, reduces a gap between the first electrode sheet and the second electrode sheets, and alleviates the problem of lithium plating, thereby improving the performance of the battery cell.

The battery cell disclosed in this embodiment of the present application may be used in but is not limited to a power consuming apparatus such as a vehicle, a ship, or an aircraft. The battery cell and the battery disclosed in the present application may be used for forming a power supply system of the power consuming apparatus. In this way, it is beneficial to reducing the misalignment between a plurality of layers of the electrode sheet and improving the flatness of the first electrode sheet after folding, thereby improving the performance of the battery cell.

An embodiment of the present application provides a power consuming apparatus using a battery as a power source. The power consuming apparatus may be, but is not limited to, a mobile phone, a tablet computer, a notebook computer, an electric toy, an electric tool, a battery vehicle, an electric vehicle, a ship, a spacecraft, and the like. The electric toy may include a fixed or mobile electric toy, such as a game machine, an electric vehicle toy, an electric ship toy and an electric airplane toy, and the spacecraft may include an airplane, a rocket, an aerospaceplane, a spaceship, and the like.

For ease of description, a power consuming apparatus according to an embodiment of the present application being a vehicle 1000 is used as an embodiment for description in the following embodiments.

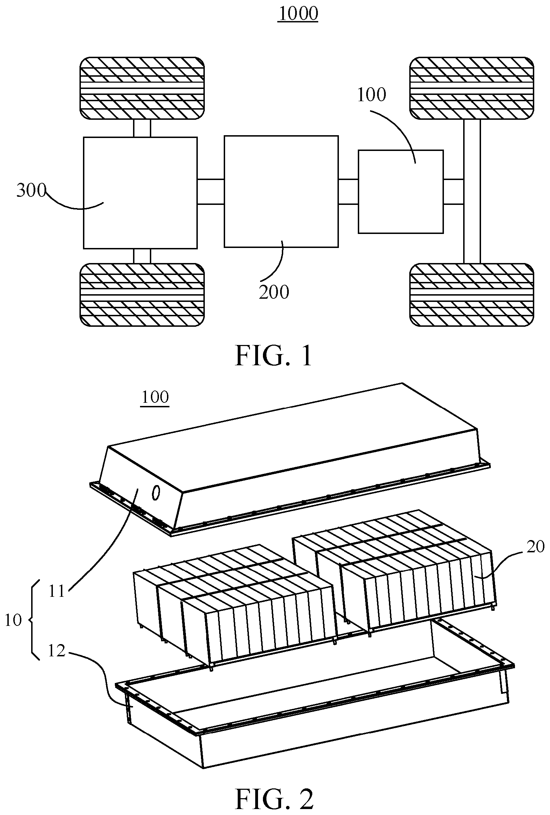

Referring to FIG. 1, FIG. 1 is a schematic structural diagram of a vehicle according to some embodiments of the present application. The vehicle 1000 may be a fuel vehicle, a gas vehicle, or a new energy vehicle. The new energy vehicle may be an all-electric vehicle, a hybrid electric vehicle, a range-extended electric vehicle, or the like. The inside of the vehicle 1000 is provided with a battery 100. The battery 100 may be arranged at the bottom, head, or tail of the vehicle 1000. The battery 100 may be configured to supply power to the vehicle 1000. For example, the battery 100 may be used as an operational power source for the vehicle 1000. The vehicle 1000 may further include a controller 200 and a motor 300. The controller 200 is used for controlling the battery 100 to supply power to the motor 300, for example, to meet working power requirements during starting, navigation, and traveling of the vehicle 1000.

In some embodiments of the present application, the battery 100 can not only serve as an operating power supply of the vehicle 1000, but can also serve as a driving power supply of the vehicle 1000, in place of or partially in place of fuel or natural gas, to provide driving power for the vehicle 1000.

Referring to FIG. 2, FIG. 2 is a schematic diagram of an exploded structure of a battery according to some embodiments of the present application. The battery 100 includes a box 10 and battery cells 20. The battery cells 20 are accommodated in the box 10. The box 10 is configured to provide an accommodating space for the battery cells 20. The box 10 may adopt a variety of structures. In some embodiments, the box 10 may include a first part 11 and a second part 12. The first part 11 and the second part 12 cover each other. The first part 11 and the second part 12 jointly define the accommodating space for accommodating the battery cells 20. The second part 12 may be a hollow structure with an open end. The first part 11 may be a plate-like structure. The first part 11 covers an open side of the second part 12, so that the first part 11 and the second part 12 jointly define the accommodating space. Alternatively, both the first part 11 and the second part 12 may be of hollow structures with open sides, and the open side of the first part 11 covers the open side of the second part 12. Of course, the box 10 formed by the first part 11 and the second part 12 may be in various shapes, such as cylindrical shape and cuboidal shape.

In the battery 100, a plurality of battery cells 20 may be provided. The plurality of battery cells 20 may be connected in series, parallel, or series-parallel. Series-parallel connection means that both series connection and parallel connection exist among the plurality of battery cells 20. The plurality of battery cells 20 may be directly connected in series, in parallel, or in series-parallel together, and then the whole formed by the plurality of battery cells 20 may be accommodated in the box 10. Of course, the battery 100 may be structured such that the plurality of battery cells 20 are first connected in series, in parallel, or in series-parallel to form battery modules, and then a plurality of battery modules are connected in series, in parallel, or in series-parallel to form a whole, which is accommodated in the box 10. The battery 100 may also include other structures. For example, the battery 100 may also include a bus component for achieving electrical connection among the plurality of battery cells 20.

Each battery cell 20 may be a secondary battery or a primary battery, and may alternatively be a lithium-sulfur battery, a sodium-ion battery, or a magnesium-ion battery, but is not limited thereto. The battery cell 20 may be in a cylindrical shape, a flat body shape, a cuboidal shape, or any other shape.

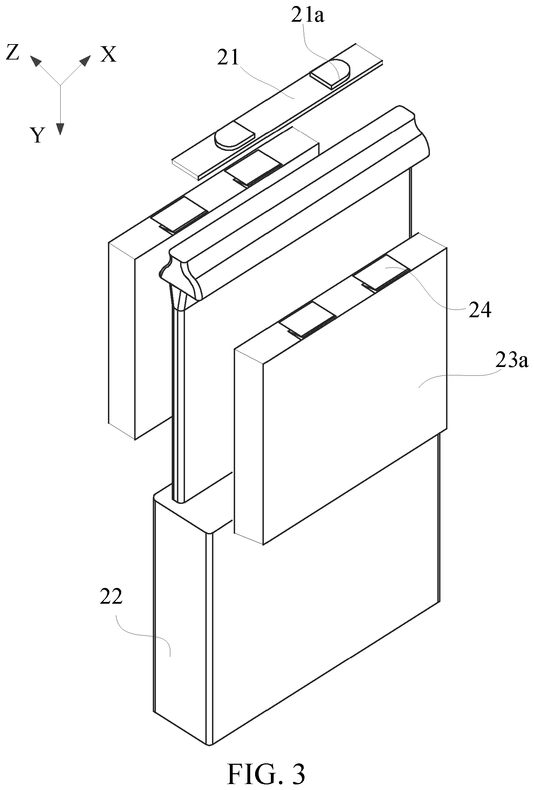

Referring to FIG. 3, FIG. 3 is a schematic diagram of an exploded structure of a battery cell according to some embodiments of the present application. A battery cell 20 is the smallest unit forming a battery. As shown in FIG. 3, the battery cell 20 includes an end cover 21, a case 22, a cell assembly 23, and other functional components.

The end cover 21 refers to a component that covers an opening of the case 22 to isolate an internal environment of the battery cell 20 from an external environment. A shape of the end cover 21 is not limited and may be adapted to a shape of the case 22 to fit the case 22. In some embodiments, the end cover 21 may be made of a material with specified hardness and strength (for example, aluminum alloy), so that the end cover 21 is less likely to deform under pressing and collision, to enable the battery cell 20 to have higher structural strength and enhanced safety performance. Functional components such as electrode terminals 21a may be arranged on the end cover 21. The electrode terminals 21a may be configured to electrically connect to the cell assembly 23 to output or input electric energy of the battery cell 20. In some embodiments, the end cover 21 may also be provided with a pressure relief mechanism configured to relieve internal pressure when the internal pressure or temperature in the battery cell 20 reaches a threshold. The end cover 21 may also be made of various materials, for example, copper, iron, aluminum, stainless steel, an aluminum alloy, and plastic. In some embodiments, an insulator may also be arranged on an inner side of the end cover 21. The insulator may be configured to isolate electrical connection components in the case 22 from the end cover 21, reducing a risk of short circuit. For example, the insulator may be plastic, rubber, or the like.

The case 22 is an assembly configured to form an internal environment of the battery cells 20 together with the end cover 21, where the formed internal environment may be configured to accommodate the cell assembly 23, an electrolyte, and other components. The case 22 and the end cover 21 may be separate components, an opening may be provided in the case 22, and the end cover 21 covers the opening to form the internal environment of the battery cell 20. Without limitation, the end cover 21 and the case 22 may also be integrated. Specifically, the end cover 21 and the case 22 may form a shared connection surface before other elements are arranged inside the case, and then the end cover 21 covers the case 22 when the inside of the case 22 needs to be enclosed. The case 22 may be of various shapes and sizes, such as a rectangular shape, a cylindrical shape, and a hexagonal prism shape. Specifically, the shape of the case 22 may be determined based on a specific shape and size of the cell assembly 23. The case 22 may be made of various materials, such as copper, iron, aluminum, stainless steel, aluminum alloy, and plastics.

The cell assembly 23 is a component in the battery cell 20 that undergoes electrochemical reactions. The case 22 may include one or more cell assemblies 23. The cell assembly 23 is mainly formed by winding or laminating a positive electrode sheet and a negative electrode sheet, and a separator is usually arranged between the positive electrode sheet and the negative electrode sheet. Parts of the positive electrode sheet and the negative electrode sheet with active materials form a body portion of the cell assembly, while parts of the positive electrode sheet and the negative electrode sheet without active materials separately form tabs 23a. The tab of the positive electrode and the tab of the negative electrode may be located at the same end of the body portion or may be respectively located at two ends of the body portion. During charging and discharging of the battery, the positive electrode active material and the negative electrode active material react with an electrolyte solution, and the tabs 23a are connected to the electrode terminals to form a current loop.

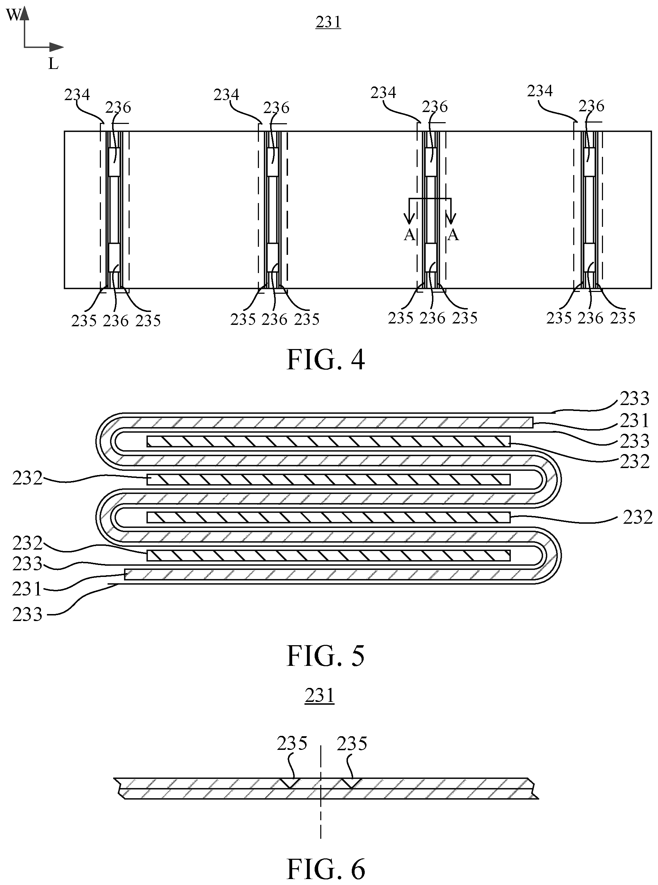

An embodiment of the present application provides a battery cell 20. FIG. 4 is a schematic structural diagram of a first electrode sheet 231 in an unfolded state according to some embodiments of the present application. FIG. 5 is a schematic structural diagram of a battery cell 20 formed by folding according to some embodiments of the present application. As shown in FIG. 4 and FIG. 5, the battery cell 20 includes a first electrode sheet 231, separators 233, and a plurality of second electrode sheets 232. The first electrode sheet 231 is provided with a plurality of structurally weakened areas 234 extending in a width direction W of the first electrode sheet 231. The separators 233 cover two opposite sides of the first electrode sheet 231. The plurality of second electrode sheets 232 are alternately arranged on the separators 233 on the two opposite sides of the first electrode sheet 231. Every two adjacent second electrode sheets 232 are located on different sides of the first electrode sheet 231 in a length direction L of the first electrode sheet 231, and one corresponding structurally weakened area 234 is present between every two adjacent second electrode sheets 232. The first electrode sheet 231 is folded at the plurality of structurally weakened areas 234, so that the first electrode sheet 231 and the plurality of second electrode sheets 232 are alternately stacked with each other.

In this embodiment of the present application, the battery cell 20 may be a lithium-ion battery cell, a sodium-ion battery cell, a sodium-lithium-ion battery cell, a lithium metal battery cell, a sodium metal battery cell, a lithium-sulfur battery cell, a magnesium-ion battery cell, a nickel-metal hydride battery cell, a nickel-cadmium battery cell, a lead-acid battery cell, and the like, which is not limited in the embodiments of the present application.

In this embodiment of the present application, the first electrode sheet 231 and the second electrode sheets 232 have opposite polarities, and a plurality of segments of the first electrode sheet 231 and the second electrode sheets 232 are alternately stacked with each other. Specifically, the first electrode sheet 231 may be a cathode sheet, and the second electrode sheet 232 may be an anode sheet. Alternatively, the first electrode sheet 231 may be an anode sheet, and the second electrode sheet 232 may be a cathode sheet.

FIG. 4 is a schematic structural diagram of the first electrode sheet 231 in an unfolded state according to some embodiments of the present application. L is the length direction of the first electrode sheet 231, and W is the width direction of the first electrode sheet 231. The first electrode sheet 231 is provided with the plurality of structurally weakened areas 234 extending in the width direction W of the first electrode sheet 231. The structurally weakened area 234 may be provided in a manner of including grooves 235 in the first electrode sheet 231, or the structurally weakened area 234 may be provided in a manner of including through holes 236 in the first electrode sheet 231. A strength of the structurally weakened area 234 is less than a mechanical strength of the remaining areas of the first electrode sheet 231. For example, the first electrode sheet 231 may include a current collector and an active material layer. The active material layer is arranged on a surface of the current collector perpendicular to a thickness direction. The active material layer may be arranged on two sides of the current collector. The structurally weakened area 234 may be provided in a manner of reducing the mechanical strength of the first electrode sheet 231 by removing the active material from the surface of the active material layer.

The two opposite sides of the first electrode sheet 231 are covered with the separators 233. The first electrode sheet 231 and the second electrode sheets 232 may be insulated by using the separators 233, thereby improving the operation performance and safety of the battery cell 20. The type of the separator 233 is not particularly limited in the present application, and any well-known separator 233 with a porous structure having good chemical stability and mechanical stability may be selected. As an example, the main material of the separator 233 may be selected from at least one of glass fibers, non-woven fabric, polyethylene, polypropylene, polyvinylidene fluoride, and ceramic. The separator 233 may be either a single-layer film or a multi-layer composite film, which is not particularly limited. When the separator 233 is a multi-layer composite film, the materials in respective layers may be same or different, which is not particularly limited.

FIG. 5 is a schematic structural diagram of the battery cell 20 formed by folding according to some embodiments of the present application. The battery cell 20 includes the first electrode sheet 231, the separators 233, and the plurality of second electrode sheets 232. The first electrode sheet 231 and the separators 233 covering the two opposite sides of the first electrode sheet 231 are folded at the plurality of structurally weakened areas 234, so that the plurality of segments of the first electrode sheet 231 and the plurality of second electrode sheets 232 are alternately stacked with each other. The structurally weakened areas 234 are located at the bends. Every two adjacent segments of the first electrode sheet 231 are connected through the structurally weakened area 234. Every two adjacent second electrode sheets 232 are located on different sides of the first electrode sheet 231, and one corresponding structurally weakened area 234 is present between every two adjacent second electrode sheets 232.

At the structurally weakened areas 234 where the continuous electrode sheet is folded, the first electrode sheet 231 at the structurally weakened areas 234 wraps the second electrode sheets 232, and the first electrode sheet 231 and the second electrode sheet 232 overlap each other, so that lithium ions obtained by electrolysis from the cathode sheet during the reaction of the battery cell 20 can completely reach a coating area of the anode sheet active material of the anode sheet that the lithium ions face directly, the active material at the folded positions cannot easily come off due to folding, and the first electrode sheet 231 is not easily broken by folding.

According to this embodiment of the present application, the first electrode sheet 231 is provided with the plurality of structurally weakened areas 234 extending in the width direction W of the first electrode sheet 231. Because the mechanical strength of the plurality of structurally weakened areas 234 is less than the mechanical strength of the remaining areas of the first electrode sheet 231, by providing the plurality of structurally weakened areas 234 extending in the width direction W of the first electrode sheet 231 on the first electrode sheet 231, the first electrode sheet 231 can be bent more easily and can be accurately folded at predetermined positions, thereby reducing the misalignment between the first electrode sheet 231 and the second electrode sheets 232 and improving the flatness of the first electrode sheet 231 after folding. In addition, when the plurality of segments of the first electrode sheet 231 and the plurality of second electrode sheets 232 are alternately stacked with each other, every two adjacent segments of the first electrode sheet 231 are connected through the structurally weakened area 234, every two adjacent second electrode sheets 232 are located on different sides of the first electrode sheet 231, and one corresponding structurally weakened area 234 is present between every two adjacent second electrode sheets 232, which reduces a gap between the first electrode sheet 231 and the second electrode sheets 232 and alleviates the problem of lithium plating of the battery cell 20, thereby improving the performance of the battery cell 20.

According to some embodiments of the present application, the structurally weakened area 234 includes grooves 235 extending in the width direction W of the first electrode sheet 231.

In this embodiment of the present application, the grooves 235 extend in the width direction W of the first electrode sheet 231. The grooves 235 may be formed by using a metal tool, a laser tool, liquid etching, or the like. A cross section of the groove 235 may be rectangular, trapezoidal, triangular, or the like. For example, the first electrode sheet 231 may include a current collector and an active material layer. The active material layer is arranged on the current collector. The groove 235 extending in the width direction W of the first electrode sheet 231 may be formed by removing an active material from the active material layer. A depth of the groove 235 does not exceed the thickness of the first electrode sheet 231.

In some embodiments, FIG. 6 is a sectional view taken along line A-A in FIG. 4. A cross section of the groove 235 may be triangular. There may be a plurality of grooves 235. After the first electrode sheet 231 is folded at the structurally weakened area 234, the groove 235 is located at an inner side of the bend. When the groove 235 is located at the inner side of the bend, even if a curvature radius of the inner side of the bend is small or a width of the groove 235 in an extension direction is small, two adjacent segments of the first electrode sheet 231 are less likely to interfere with each other, so that the first electrode sheet 231 can be successfully folded, and the possibility of powder shedding is reduced.

In this embodiment of the present application, the structurally weakened area 234 includes the grooves 235 extending in the width direction W of the first electrode sheet 231, which has a good effect of guiding the bending of the first electrode sheet 231. In addition, the grooves 235 can improve the precision of folded positions and reduce the misalignment after two adjacent layers of the electrode sheet in the battery cell 20 are stacked, so that the battery cell 20 has good performance.

According to some embodiments of the present application, the structurally weakened area 234 includes two grooves 235 extending in the width direction W of the first electrode sheet 231, and the two grooves 235 are spaced apart from each other in the length direction L of the first electrode sheet 231.

In this embodiment of the present application, the structurally weakened area 234 includes the two grooves 235 extending in the width direction W of the first electrode sheet 231, and the two grooves 235 are spaced apart from each other in the length direction L of the first electrode sheet 231, so that the first electrode sheet 231 can be folded along the two grooves 235, which makes the first electrode sheet 231 folded more easily and improves the precision of the folded positions. In addition, the segments of the first electrode sheet 231 can be aligned with each other, which reduces the misalignment between the first electrode sheet 231 and the second electrode sheets 232, thereby further improving the performance of the battery cell 20.

According to some embodiments of the present application, a spacing between the two grooves 235 is greater than or equal to a thickness of a corresponding second electrode sheet 232.

In this embodiment of the present application, the spacing between the two grooves 235 is greater than or equal to the thickness of the corresponding second electrode sheet 232. The spacing between the structurally weakened areas 234 of the first electrode sheet 231 in the length direction L of the first electrode sheet 231 may be greater than or equal to the thickness of a corresponding second electrode sheet 232. The first electrode sheet 231 is folded at the plurality of structurally weakened areas 234, and the spacing between formed bends is greater than or equal to the thickness of the second electrode sheet 232, so that when the plurality of segments of the first electrode sheet 231 and the plurality of second electrode sheets 232 are alternately stacked with each other, the second electrode sheets 232 are not squeezed by the first electrode sheet 231. In addition, the gap between the first electrode sheet 231 and the second electrode sheets 232 at the bends can be reduced, which alleviates the problem of lithium plating of the battery cell 20, thereby improving the performance of the battery cell 20.

According to some embodiments of the present application, a length of each of the grooves 235 is less than or equal to a width of the first electrode sheet 231.

In this embodiment of the present application, the length of each of the grooves 235 is less than or equal to the width of the first electrode sheet 231, thereby defining the maximum length of the groove 235. Because the length of the groove 235 does not exceed the width of the first electrode sheet 231, the mechanical strength of the structurally weakened area 234 can be maintained at a particular level, thereby reducing the probability of breaking of the first electrode sheet 231 during folding and improving the production yield of the battery cell 20.

According to some embodiments of the present application, the structurally weakened area 234 further includes through holes 236 running through a thickness of the first electrode sheet 231.

In this embodiment of the present application, the through hole 236 may be a circular hole, a rectangular hole, an oval hole, a rhombic hole, or the like. The through holes 236 provided can reduce the strength of the bends, playing the same role as the grooves 235. In addition, the through holes 236 may also play a locating role. One or more through holes 236 may be provided.

For example, as shown in FIG. 4, the through hole 236 may be located in the middle of two grooves 235.

In some embodiments, the structurally weakened area 234 of the first electrode sheet 231 may include both the grooves 235 and the through holes 236. The grooves 235 and the through holes 236 may work together to reduce the mechanical strength of the structurally weakened area 234 of the first electrode sheet 231. Because the structurally weakened area 234 of the first electrode sheet 231 includes the through holes 236, when the same mechanical strength needs to be achieved, the depth of the grooves 235 may be properly reduced, which helps improve the force distribution on the first electrode sheet 231 at the structurally weakened area 234 during folding, and reduces the risk of breaking while ensuring that the first electrode sheet 231 is easily bent.

In this embodiment of the present application, because the first electrode sheet 231 has a small thickness, the through holes 236 does not need precise depth control, which can lower the requirement on machining precision. In addition, the through holes 236 can greatly reduce the strength of the first electrode sheet 231, which makes the first electrode sheet folded easily.

According to some embodiments of the present application, a number N of the through holes 236 satisfies: N≥2.

In this embodiment of the present application, the through holes 236 may be spaced apart in the width direction W of the first electrode sheet 231. By providing the plurality of through holes 236, the mechanical strength of the first electrode sheet 231 can be reduced, and the structurally weakened areas 234 of the first electrode sheet 231 can maintain a particular mechanical strength, so as to reduce the possibility of breaking of the first electrode sheet 231 during folding.

According to some embodiments of the present application, the plurality of structurally weakened areas 234 are equidistantly spaced apart from each other in the length direction L of the first electrode sheet 231.

In this embodiment of the present application, in the schematic structural diagram of the first electrode sheet 231 in the unfolded state shown in FIG. 4, the plurality of structurally weakened areas 234 are spaced apart in the length direction L of the first electrode sheet 231, and each structurally weakened area 234 is located at a to-be-folded position. The plurality of structurally weakened areas 234 are equidistantly spaced apart from each other in the length direction L of the first electrode sheet 231. Parallelism between the plurality of structurally weakened areas 234 is high, and edges of the folded battery cell 20 along the stacking direction are neat. During folding, the folding may be assisted by using an automatic beating mechanism, so as to facilitate folding in place.

In this embodiment of the present application, the plurality of structurally weakened areas 234 are equidistantly spaced apart from each other in the length direction L of the first electrode sheet 231. By setting a suitable spacing distance, the structurally weakened areas 234 can be located at the bends, so that the strength at the bend can be reduced. Thus, the first electrode sheet 231 can be bent more easily and can be accurately folded at the predetermined positions, which reduces the misalignment of the plurality of layers of the electrode sheet and improves the flatness of the first electrode sheet 231 after folding, thereby improving the performance of the battery cell 20.

According to some embodiments of the present application, the first electrode sheet 231 is an anode sheet, and the second electrode sheets 232 are cathode sheets.

In this embodiment of the present application, after being folded, the first electrode sheet 231 is located at an outermost side in the stacking direction. Typically, a cathode active material in the cathode sheet is a ternary material, lithium manganate, lithium iron phosphate, or the like. An anode active material in the anode sheet is graphite or silicon. Because the cathode active material is more expensive than the anode active material, the anode sheet is provided as the outermost layer of the battery cell 20, so that the number of layers of the negative electrode sheets after folding can be reduced, and the cathode active material of the cathode sheet can be fully used.

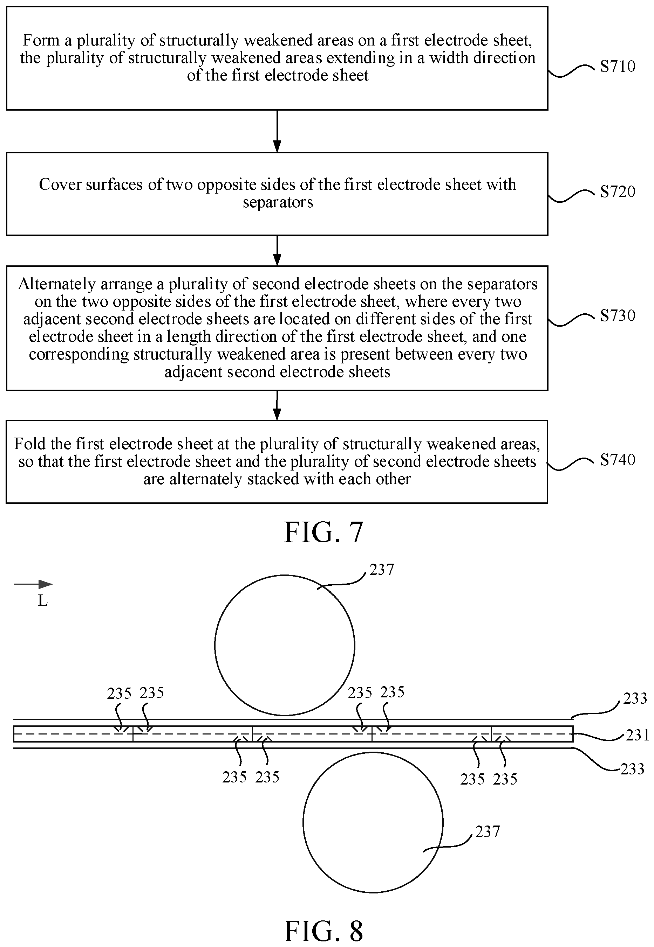

According to some embodiments of the present application, according to some embodiments of the present application, a method for producing a battery cell is provided. FIG. 7 is a flowchart of a production method of a battery cell according to some embodiments of the present application. Referring to FIG. 7, the method includes:
Step S710: Form a plurality of structurally weakened areas on a first electrode sheet, the plurality of structurally weakened areas extending in a width direction of the first electrode sheet.
Step S720: Cover surfaces of two opposite sides of the first electrode sheet with separators.
Step S730: Alternately arrange a plurality of second electrode sheets on the separators on the two opposite sides of the first electrode sheet, where every two adjacent second electrode sheets are located on different sides of the first electrode sheet in a length direction of the first electrode sheet, and one corresponding structurally weakened area is present between every two adjacent second electrode sheets.
Step S740: Fold the first electrode sheet at the plurality of structurally weakened areas, so that the first electrode sheet and the plurality of second electrode sheets are alternately stacked with each other.

In this embodiment of the present application, in this embodiment of the present application, the battery cell 20 may be a lithium-ion battery cell, a sodium-ion battery cell, a sodium-lithium-ion battery cell, a lithium metal battery cell, a sodium metal battery cell, a lithium-sulfur battery cell, a magnesium-ion battery cell, a nickel-metal hydride battery cell, a nickel-cadmium battery cell, a lead-acid battery cell, and the like, which is not limited in the embodiments of the present application.

In this embodiment of the present application, the first electrode sheet 231 and the second electrode sheets 232 have opposite polarities, and a plurality of segments of the first electrode sheet 231 and the second electrode sheets 232 are alternately stacked with each other. Specifically, the first electrode sheet 231 may be a cathode sheet, and the second electrode sheet 232 may be an anode sheet. Alternatively, the first electrode sheet 231 may be an anode sheet, and the second electrode sheet 232 may be a cathode sheet.

In this embodiment of the present application, the plurality of structurally weakened areas 234 extending in a width direction W of the first electrode sheet 231 are formed on the first electrode sheet 231. The structurally weakened area 234 may be formed in a manner of providing grooves 235 in the first electrode sheet 231, or the structurally weakened area 234 may be formed in a manner of providing through holes 236 in the first electrode sheet 231. A strength of the structurally weakened area 234 is less than a mechanical strength of the remaining areas of the first electrode sheet 231. For example, the first electrode sheet 231 may include a current collector and an active material layer. The active material layer is arranged on a surface of the current collector perpendicular to a thickness direction. The active material layer may be arranged on two sides of the current collector. The structurally weakened area 234 may be formed in a manner of reducing the mechanical strength of the first electrode sheet 231 by removing an active material from the surface of the active material layer.

In this embodiment of the present application, before the battery cell 20 is formed, the first electrode sheet 231 and the two separators 233 are stacked and then composited to form a continuous, foldable composite electrode sheet. The first electrode sheet 231 and the separators 233 are alternately arranged. Separators 233 are arranged on the two sides of the first electrode sheet 231, to play an insulation role. Adhesive layers may be respectively arranged on two sides of the separator 233. For example, the adhesive layers are polyvinylidene fluoride coated separator (PCS) layers. In a process of composition by heating and applying pressure to the first electrode sheet 231 and the separators 233, lots of particles in a dotted distribution in the PCS layers are flattened to generate an adhesion force to the first electrode sheet 231.

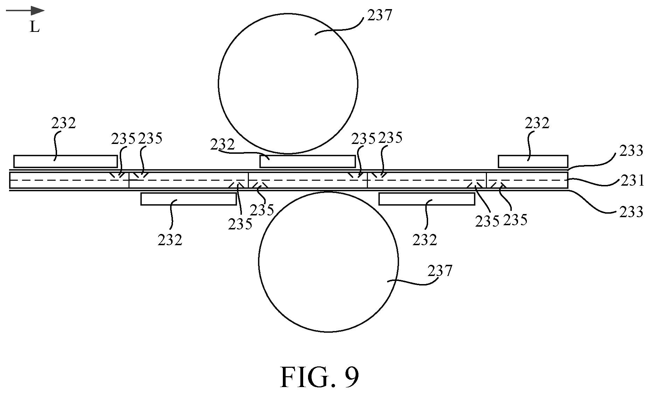

In a process manner, FIG. 8 is a composite schematic diagram of a first electrode sheet 231 and separators 233 according to some embodiments of the present application. As shown in FIG. 8, surfaces on two opposite sides of the first electrode sheet 231 are covered with the separators 233, and pressure is applied by using rollers 237, so as to attach the separators 233 to the first electrode sheet 231 through the PCS layers. FIG. 9 is a composite schematic diagram of a first electrode sheet 231, second electrode sheets 232, and separators 233 according to some embodiments of the present application. As shown in FIG. 9, the plurality of second electrode sheets 232 are alternately arranged on the separators 233 on two opposite sides of the first electrode sheet 231 in the length direction L of the first electrode sheet 231. Every two adjacent second electrode sheets 232 are located on different sides of the first electrode sheet 231, and one corresponding structurally weakened area 234 is present between every two adjacent second electrode sheets 232. A pressure is applied by using rollers 237, so as to attach the second electrode sheet 232 to the separator 233.

In addition, the composition may also be performed by cold pressing, electrophoresis or bonding.

In this embodiment of the present application, the first electrode sheet 231 and the separators 233 covering the two opposite sides of the first electrode sheet 231 are folded at the plurality of structurally weakened areas 234, so that the plurality of segments of the first electrode sheet 231 and the plurality of second electrode sheets 232 are alternately stacked with each other. The structurally weakened areas 234 are located at the bends. Every two adjacent segments of the first electrode sheet 231 are connected through the structurally weakened area 234. Every two adjacent second electrode sheets 232 are located on different sides of the first electrode sheet 231, and one corresponding structurally weakened area 234 is present between every two adjacent second electrode sheets 232.

At the structurally weakened areas 234 where the continuous electrode sheet is folded, the first electrode sheet 231 at the structurally weakened areas 234 wraps the second electrode sheets 232, and the first electrode sheet 231 and the second electrode sheet 232 overlap each other, so that lithium ions obtained by electrolysis from the cathode sheet during the reaction of the battery cell 20 can completely reach a coating area of the anode sheet active material of the anode sheet that the lithium ions face directly, the active material at the folded positions cannot easily come off due to folding, and the first electrode sheet 231 is not easily broken by folding.

According to this embodiment of the present application, the plurality of structurally weakened areas 234 extending in the width direction W of the first electrode sheet 231 are formed on the first electrode sheet 231, so that the first electrode sheet 231 can be bent more easily and can be accurately folded at the predetermined positions, thereby reducing the misalignment between the first electrode sheet 231 and the second electrode sheets 232 and improving the flatness of the first electrode sheet 231 after folding. In addition, when a plurality of segments of the first electrode sheet 231 and the plurality of second electrode sheets 232 are alternately stacked with each other, every two adjacent segments of the first electrode sheet 231 are connected through the structurally weakened area 234, every two adjacent second electrode sheets 232 are located on different sides of the first electrode sheet 231, and one corresponding structurally weakened area 234 is present between every two adjacent second electrode sheets 232, which reduces a gap between the first electrode sheet 231 and the second electrode sheets 232 and alleviates the problem of lithium plating, thereby improving the performance of the battery cell 20.

An embodiment of the present application provides a battery, including the battery cell 20 in any foregoing embodiment.

In this embodiment of the present application, the battery may be applied to, but not limited to, a mobile phone, a tablet computer, a laptop, an electric toy, an electric tool, a battery car, an electric vehicle, a ship, a spacecraft, and the like. The electric toy may include a fixed or mobile electric toy, such as a game machine, an electric vehicle toy, an electric ship toy and an electric airplane toy, and the spacecraft may include an airplane, a rocket, an aerospaceplane, a spaceship, and the like.

By using the battery cell 20 in the embodiments of the present application, the reliability of the battery can be improved.

An embodiment of the present application further provides a power consuming apparatus, including the battery in any foregoing embodiment. The battery is configured to supply electric energy.

In this embodiment of the present application, in this embodiment of the present application, the power consuming apparatus may be, but is not limited to, a mobile phone, a tablet, a notebook computer, an electric toy, an electric tool, a battery cart, an electric vehicle, a ship, a spacecraft, etc. The electric toy may include a fixed or mobile electric toy, such as a game machine, an electric vehicle toy, an electric ship toy and an electric airplane toy, and the spacecraft may include an airplane, a rocket, an aerospaceplane, a spaceship, and the like.

By using the battery in the embodiments of the present application, the reliability of the power consuming apparatus is improved.

The following further describes the technical solutions of the present application by using a specific embodiment, as shown in FIG. 1 to FIG. 9.

The battery cell 20 includes a first electrode sheet 231, separators 233, and a plurality of second electrode sheets 232. The first electrode sheet 231 is provided with a plurality of structurally weakened areas 234 extending in a width direction W of the first electrode sheet 231. The separators 233 cover two opposite sides of the first electrode sheet 231. The plurality of second electrode sheets 232 are alternately arranged on the separators 233 on the two opposite sides of the first electrode sheet 231. Every two adjacent second electrode sheets 232 are located on different sides of the first electrode sheet 231 in a length direction L of the first electrode sheet 231, and one corresponding structurally weakened area 234 is present between every two adjacent second electrode sheets 232. The first electrode sheet 231 is folded at the plurality of structurally weakened areas 234, so that the first electrode sheet 231 and the plurality of second electrode sheets 232 are alternately stacked with each other. The first electrode sheet 231 is an anode sheet, and the second electrode sheet 232 is a cathode sheet.

The structurally weakened area 234 includes two grooves 235 extending in the width direction W of the first electrode sheet 231, and the two grooves 235 are spaced apart from each other in the length direction L of the first electrode sheet 231. A spacing between the two grooves 235 is greater than or equal to a thickness of a corresponding second electrode sheet 232. A length of each of the grooves 235 is less than or equal to a width of the first electrode sheet 231.

The structurally weakened area 234 further includes through holes 236 running through a thickness of the first electrode sheet 231. A number N of the through holes 236 satisfies: N≥2.

Finally, it should be noted that the foregoing embodiments are only used to illustrate the technical solution of the present application, not to limit it. Although the present applicant has been described in detail with reference to the foregoing embodiments, it should be understood by a person of ordinary skill in the art that the technical solution described in the foregoing embodiments can still be modified or some or all of the technical features thereof can be equivalently replaced. However, these modifications or substitutions do not depart the essence of the corresponding technical solution from the scope of the technical solution of each embodiment of the present application, and should be covered in the scope of the claims and descriptions of the present application. In particular, the various technical features mentioned in the various embodiments can be combined in any way provided that there is no structural conflict. The present application is not limited to the specific embodiments disclosed herein, but includes all technical solutions that fall within the scope of the claims.

## Claims

1. A battery cell (20), comprising:
a first electrode sheet (231), provided with a plurality of structurally weakened areas (234) extending in a width direction of the first electrode sheet (231);
separators (233), covering surfaces on two opposite sides of the first electrode sheet (231); and
a plurality of second electrode sheets (232), alternately arranged on the separators (233) on the two opposite sides of the first electrode sheet (231), wherein every two adjacent second electrode sheets (232) are located on different sides of the first electrode sheet (231) in a length direction of the first electrode sheet (231), and one corresponding structurally weakened area (234) is present between every two adjacent second electrode sheets (232), wherein
the first electrode sheet (231) is folded at the plurality of structurally weakened areas (234), so that the first electrode sheet (231) and the plurality of second electrode sheets (232) are alternately stacked with each other.

2. The battery cell (20) according to claim 1, wherein the structurally weakened area (234) comprises a groove (235) extending in the width direction of the first electrode sheet (231).

3. The battery cell (20) according to claim 1 or 2, wherein the structurally weakened area (234) comprises two grooves (235) extending in the width direction of the first electrode sheet (231), and the two grooves (235) are spaced apart from each other in the length direction of the first electrode sheet (231).

4. The battery cell (20) according to claim 3, wherein a spacing between the two grooves (235) is greater than or equal to a thickness of a corresponding second electrode sheet (232).

5. The battery cell (20) according to any one of claims 2 to 4, wherein a length of each of the groove (235) is less than or equal to a width of the first electrode sheet (231).

6. The battery cell (20) according to any one of claims 1 to 5, wherein the structurally weakened area (234) further comprises through holes (236) running through a thickness of the first electrode sheet (231).

7. The battery cell (20) according to claim 6, wherein a number N of the through holes (236) satisfies: N≥2.

8. The battery cell 20 according to any one of claims 1 to 7, wherein the plurality of structurally weakened areas (234) are equidistantly spaced apart from each other in the length direction of the first electrode sheet (231).

9. The battery cell 20 according to any one of claims 1 to 8, wherein the first electrode sheet (231) is an anode sheet, and the second electrode sheets (232) are cathode sheets.

10. A method for producing a battery cell, comprising:
forming a plurality of structurally weakened areas on a first electrode sheet, the plurality of structurally weakened areas extending in a width direction of the first electrode sheet;
covering surfaces of two opposite sides of the first electrode sheet with separators;
alternately arranging a plurality of second electrode sheets on the separators on the two opposite sides of the first electrode sheet, wherein every two adjacent second electrode sheets are located on different sides of the first electrode sheet in a length direction of the first electrode sheet, and one corresponding structurally weakened area is present between every two adjacent second electrode sheets; and
folding the first electrode sheet at the plurality of structurally weakened areas, so that the first electrode sheet and the plurality of second electrode sheets are alternately stacked with each other.

11. A battery, comprising the battery cell (20) according to any one of claims 1 to 10.

12. A power consuming apparatus, comprising the battery according to claim 11, the battery being configured to supply electric energy.
